# EUROPEAN PATENT SPECIFICATION

(11) **EP 4 267 683 B1**
(45) Date of publication and mention of the grant of the patent: **29.01.2025**
(21) Application number: 21836208.5
(22) Date of filing: 20.12.2021
(51) Int. Cl.: C09D 5/00, C09D 5/03, C09D 133/06, C09D 5/02

(54) **ACRYLATE RESINS AND POWDER COATING COMPOSITIONS AND POWDER COATED SUBSTRATES INCLUDING THE SAME**
ACRYLATHARZE UND PULVERBESCHICHTUNGSZUSAMMENSETZUNGEN UND PULVERBESCHICHTETE SUBSTRATE DAMIT
RÉSINES ACRYLIQUES ET COMPOSITIONS DE REVÊTEMENT EN POUDRE ET SUBSTRATS REVÊTUS DE POUDRE LES COMPRENANT

(30) Priority: 28.12.2020 EP 20217340
(43) Date of publication of application: 01.11.2023
(73) Proprietor: Akzo Nobel Coatings International B.V., 1077 WW Amsterdam (NL)
(72) Inventor: FLEETHAM, Victoria Paterson, 1077 WW Amsterdam (NL); GRAY, Elaine, 1077 WW Amsterdam (NL); UNTHANK, Matthew George, 1077 WW Amsterdam (NL)
(74) Representative: Akzo Nobel IP Department
(86) International application number: PCT/EP2021/086882
(87) International publication number: WO 2022/144219

(56) References cited:
- EP-A1- 2 098 575
- WO-A1-2006/046003
- WO-A1-2015/128361
- WO-A2-2008/124266
- US-A- 5 330 627

## Description

### TECHNICAL FIELD

Thermosetting epoxy functional (meth)acrylate resins and powder coating compositions containing said resins are disclosed herein. When the thermosetting epoxy functional (meth)acrylate resins are formulated into a powder coating composition, applied and cured to form a powder coating on a substrate such as a machined aluminum automotive wheel, the powder coating provides excellent filiform corrosion resistance without impairing powder coating clarity or wet adhesion.

### BACKGROUND

The exposed portions of metal vehicle wheels can be abraded by grit and other debris from road surfaces. A hard and tough film is needed to protect the metal wheel surface. The film should be non-porous and should exhibit superior adhesion to the metal. These properties can prevent the spread of corrosion at the interface of the film and metal. However, the appearance of filiform corrosion, such as visible pitting of the coating, is not necessary for the growth of filiform corrosion. Over time, comparable film thicknesses of conventional acrylic and polyester protective clear coat powder coatings formed on aluminum wheels exhibited filiform corrosion even though the coatings appeared acceptable.

Clear coats for aluminum wheels often are applied over self-assembled monolayer (SAM or SAM+) wheel surface pretreatments. Pretreating the surface with a SAM or SAM+ can retain the bright color and appearance of the aluminum without incorporating chrome-containing compounds. Nevertheless, clear coats applied over SAM/SAM+ pretreatments may still fail to provide adequate filiform corrosion resistance. Polyester clear coats applied over pre-treated aluminum wheels and trim can provide adequate filiform corrosion resistance if the clear coat is overlaid with a liquid coating to provide adequate chemical resistance, scratch resistance and weatherability.

Epoxy-containing acrylic powder compositions are also known. U.S. Pat. Nos. 5,407,707 and 5,663,240, (Simeone, et al.), disclose powder coating compositions that include epoxy functional acrylate polymers. These compositions may provide acceptable appearance when coated over a color coat but lack acceptable weatherability.

US 9,834,634 and US 8,716,367 disclose a powder coating composition for providing filiform and CASS (Copper Accelerated Acetic Acid Salt Spray) corrosion resistance comprising a thermosetting epoxy functional acrylic resin comprising, as copolymerized monomers, specific amounts of epoxy functional unsaturated monomer, hydrophobic acrylic monomers, nonionic monomers that are different from the hydrophobic acrylic monomers. The powder coating compositions may additionally comprise one or more second resins such as a second thermosetting epoxy functional acrylic resin, a copolymerization product of one or more carboxylic acid functional monomers and one or more nonionic comonomers, a copolymerization product of one or more phosphorus acid functional monomers and one or more nonionic comonomer, and mixtures or combinations thereof. There is however a need for a resin suitable for powder coating compositions with improved filiform resistance corrosion resistance for aluminum, forged alloy or metal substrates without impairing powder coating clarity or adhesion, especially in powder coatings for aluminum or forged alloy wheels and automotive trim pretreated with, for example, hexavalent chromium-free pretreatments.

### SUMMARY

The inventors have now developed a powder coating composition, which when applied and cured to form a powder coating on a substrate (metal substrate such as aluminum) provides improved filiform resistance without impairment of powder coating clarity or wet adhesion.

The invention is directed to a thermosetting epoxy functional (meth)acrylate resin comprising, as copolymerized monomers:
i) from about 10 wt.% to about 40 wt.% of an epoxy functional unsaturated monomer;
ii) from about 10 wt.% to about 20 wt.% of an alkyl (meth)acrylate monomer, wherein the alkyl comprises a minimum of 6 carbon atoms,
iii) from about 30 wt.% to about 70 wt.% of an alkyl (meth)acrylate monomer wherein the alkyl comprises 1 to 5 carbon atoms,
iv) from about 0,5wt% to 40wt% of a dialkyl vinylphosphonate monomer,
v) from about 1 wt.% to about 50 wt.% of a vinyl aromatic monomer, and
vi) from about 0 wt% to 0.4wt% of a phosphonic acid monomer, wherein each monomer wt.% based on the total weight of copolymerized monomers in the resin.

The invention is also directed to a powder coating composition comprising the thermosetting epoxy functional (meth)acrylate resin and a crosslinker capable of crosslinking with the resin, and to a coated substrate coated with the powder coating composition.

The powder coating compositions of the invention are suitable for coating bare or untreated metal surfaces. The powder coating compositions may be used to protect metal surfaces exposed to corrosive or abrasive environments. The powder coating compositions may be used to coat a cast or forged aluminum or aluminum alloy substrate, such as a wheel or trim for a vehicle.

### DETAILED DESCRIPTION

The thermosetting epoxy functional (meth)acrylate resins are capable of providing improved filiform and CASS corrosion resistance and being used in clear coat or tinted clear coat powder coating.

The invention is directed to a thermosetting epoxy functional (meth)acrylate resin comprising, as copolymerized monomers:
i) from about 10 wt.% to about 40 wt.% of an epoxy functional unsaturated monomer;
ii) from about 10 wt.% to about 20 wt.% of an alkyl (meth)acrylate monomer, wherein the alkyl comprises a minimum of 6 carbon atoms,
iii) from about 30 wt.% to about 70 wt.% of an alkyl (meth)acrylate monomer wherein the alkyl comprises 1 to 5 carbon atoms,
iv) from about 0,5wt% to 40wt% of a dialkyl vinylphosphonate monomer,
v) from about 1 wt.% to about 50 wt.% of a vinyl aromatic monomer, and
vi) from about 0 wt% to 0.4wt% of a phosphonic acid monomer, wherein each monomer wt.% based on the total weight of copolymerized monomers in the resin.

The terms "a" or "an" used through this description and in the claims mean "one or more". Therefore "an epoxy functional unsaturated monomer" means one or more epoxy functional unsaturated monomers, and likewise, "an alkyl (meth)acrylate monomer" means one or more alkyl (meth)acrylate monomers.

The term "(meth)acrylate" refers to either acrylate or methacrylate. The term acrylate also includes methacrylate. The term "(meth)acrylic" refers to either acrylic or methacrylic.

Suitable epoxy functional unsaturated monomers i) may include, one or more glycidyl ester of α-ß ethylenically unsaturated carboxylic acids such as (meth)acrylic, maleic or itaconic acid, and allyl glycidyl ethers. Preferably, the epoxy functional monomer is chosen from glycidyl (meth)acrylate monomers of the formula H₂C=C(R⁸)C(O)OR⁹, wherein R⁸ is H or a lower alkyl group and R⁹ is a glycidyl terminal, branched or unbranched alkylene residue containing from 1 to 4 carbon atoms, i.e. the glycidyl ring lies at the end distal to the unsaturation. Illustrative compounds within the definition of formula (I) are glycidyl acrylate, glycidyl (meth)acrylate, and 1,2-epoxybutylacrylate, preferably, glycidyl (meth)acrylate of formula, wherein R⁸ is methyl and R⁹ is a glycidyl methylene group. Glycidyl (meth)acrylate monomers may comprise a mixture of monomers of formula I. Glycidyl (meth)acrylate, can be obtained commercially from The Dow Chemical Company (Midland, MI) or the glycidyl (meth)acrylate monomer can be prepared under reaction conditions conventional to those of skill in the art.

The amount of epoxy functional unsaturated monomer i) in the thermosetting epoxy functional (meth)acrylate resin ranges from about 10 wt.% to about 40 wt.%, based on the total weight of copolymerized monomers in the epoxy functional (meth)acrylate resin. In another embodiment, the amount of epoxy functional unsaturated monomer i) in the thermosetting epoxy functional (meth)acrylate resin ranges from about 20 wt.% to about 35 wt.%. If the amount of the epoxy functional unsaturated monomer is less than about 10 wt.%, it does not measurably contribute to an improvement of solvent resistance and mechanical strength. On the other hand, if the amount exceeds about 40% by weight, no additional improvement in corrosion resistance is obtained.

Suitable alkyl (meth)acrylate monomers ii) are C₆ to C₁₅ alkyl (meth)acrylate monomers for example, monomers selected from isobornyl (meth)acrylate, dicyclopentadienyl (meth)acrylate, dihydrocyclopentadienyl (meth)acrylate, 2-ethylhexyl (meth)acrylate, cyclohexyl (meth)acrylate, lauryl (meth)acrylate, stearyl (meth)acrylate, eicosyl (meth)acrylate, cetyl (meth)acrylate, tridecyl (meth)acrylate, benzyl (meth)acrylate, phenyl (meth)acrylate or a combination thereof. Such monomers improve the filiform corrosion resistance of weatherable coatings on aluminum, such as aluminum wheels.

Preferred alkyl (meth)acrylate monomers ii) are bicycloalkyl (meth)acrylates, and branched alkyl (meth)acrylates. Preferred bicycloalkyl (meth)acrylates are dicyclopentadienyl (meth)acrylate and isobornyl (meth)acrylate, most preferably isobornyl (meth)acrylate. A preferred branched alkyl (meth)acrylate is 2-ethylhexyl (meth)acrylate. For example, the alkyl (meth)acrylate monomer ii) may comprise a bicycloalkyl (meth)acrylate, for example isobornyl (meth)acrylate, or a branched alkyl (meth)acrylate, for example 2-ethylhexyl (meth)acrylate.

The (meth)acrylate monomers ii) may also have a mass solubility in water of 3.5 g/L or less, and in another embodiment preferably, 2.5 g/L or less, and which would itself form a homopolymer having a calculated glass transition temperature (T_{g}) in a range of 50°C to 175°C, and in another embodiment preferably, about 65°C to about 175°C. The term "mass solubility" refers to the calculated solubility in water of a given material determined using the Advanced Chemistry Development (ACD/Labs) Software V9.04 (^{©} 1994-2007 ACD/Labs), and is available in the Chemical Abstracts' Registry.

In some embodiments, the (meth)acrylate monomers ii) may be free or substantially free of hydroxyl functional groups...

The amount of alkyl (meth)acrylate monomer ii) in the thermosetting epoxy functional (meth)acrylate resin ranges from about 10 wt.% to about 20 wt.%, based on the total weight of copolymerized monomers in the epoxy functional (meth)acrylate resin.

The alkyl (meth)acrylate monomer iii) may comprise one or more C1 to C5 alkyl esters of (meth)acrylic acid, such as methyl (meth)acrylate, ethyl (meth)acrylate, n-butyl (meth)acrylate, isobutyl (meth)acrylate, pentyl (meth) acrylate, neopentyl(meth)acrylate and mixtures thereof. Preferably the comonomer iii) comprises one or more monomers selected from methyl methacrylate, ethyl (meth)acrylate, n-butyl (meth)acrylate, isobutyl (meth)acrylate, or a combination thereof.

The alkyl (meth)acrylate monomer iii) may also be referred to as a "nonionic monomer". Nonionic monomers do not have acidic groups or salts, basic groups or salts, polyahl groups (e.g. OH, SH, NH), or condensation crosslinking groups.

The alkyl (meth)acrylate monomer iii) is different to the alkyl (meth)acrylate monomer ii).

The alkyl (meth)acrylate monomer iii) may have a mass solubility in water of 30 g/L or less, or, preferably, 25 g/L or less. The alkyl (meth)acrylate monomer iii) may be free or substantially free of hydroxyl functional groups..

The dialkyl vinylphosphonate monomer iv) may comprise one or more di-C₁-C₆ alkyl phosphonate monomers. The C₁-C₆ alkyl may be a linear, branched or a cyclic alkyl. Preferably the dialkyl vinylphosphonate monomer is a di-C₁-C₄ alkyl phosphonate monomer. The di-alkyl vinylphosphonate monomer may have the structure as shown in Figure 1 where each R is independently a C₁ to C₆ alkyl, preferably a C₁-C₄ alkyl, most preferably methyl or ethyl.

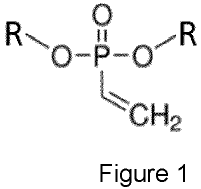

Most preferably, the dialkyl vinylphosphonate monomer comprises a dimethylphosphonate monomer (where both R groups are methyl groups).

Dialkyl vinylphosphonate monomers iv) are different to phosphonic acid monomers monomers v). It is known in the art that phosphonic acid can improve adhesion of some polymeric resins to metal substrates. Some literature teaches to prepare copolymers with phosphonic acid monomers. A vinylphosphonic acid monomer, has the structure as described above for Figure 1 except that at least one of the R groups is H. However, contrary to the teachings in the art to prepare copolymers with phosphonic acid monomers, the inventors found that if the thermosetting epoxy functional (meth)acrylate resin of this invention comprises phosphonic acid functional monomer as one of the monomers, the phosphonic acid groups react with other functional groups in the thermosetting epoxy functional (meth)acrylate resin causing gel formation and/or the formation of insoluble residues during polymerization. This makes the resultant polymer unsuitable for use in a coating composition. Phosphonic acid functionality built into the copolymer should therefore be minimized, and preferably completely avoided. Without wishing to be bound by theory, the inventors believe that the presence of both phosphonic acid and glycidyl groups in the polymeric mixture results in the unwanted build up of very high molecular weight polymeric material including thermoset polymeric network material, during the polymerisation process.

The amount of phosphonic acid monomer iv) in the thermosetting epoxy function (meth)acrylate resin ranges from 0wt% up to 0,4wt%, more preferably 0wt% to 0,2wt%, and most preferably 0wt% i.e the thermosetting epoxy function (meth)acrylate resin comprises no phosphonic acid monomer (e.g. phosphonic acid monomer) as a copolymerized monomer.

Suitable vinyl aromatic monomer v) comprise a minimum of 6 carbon atoms. Preferably the vinyl aromatic monomer v) is selected from styrene, α-methyl styrene, α-ethylstyrene and other α-alkyl substituted styrenes, vinyl toluene, divinyl benzene, and mixtures thereof. Most preferably the vinyl aromatic monomer vi) comprises styrene.

The amount of vinyl aromatic monomer v) in the thermosetting epoxy functional (meth)acrylate resin ranges from about 1 wt.% to about 50 wt.% based on the total weight of copolymerized monomers in the thermosetting epoxy functional (meth)acrylate resin. One option is for the amount of vinyl aromatic monomer v) to range from about 0.5 wt.% to about 12 wt.% of a vinyl aromatic monomer v) based on the total weight of copolymerized monomers in the thermosetting epoxy functional (meth)acrylate resin.

As can be seen from the examples herein, the thermosetting epoxy functional acrylate resin may have a T_{g} of greater than 40°C. Preferably the thermosetting epoxy functional acrylate resin have a T_{g} of greater than 50°C. Retaining a suitably high T_{g} ensures adequate blocking resistance or package stability while retaining adequate flow and film-forming properties.

In one option, the powder coating composition comprises a thermosetting epoxy functional acrylate resins according to the invention having a Tg of greater than 50°C.

In another option, the powder coating composition comprises two different thermosetting epoxy functional acrylate resins according to the invention, both resins with a Tg of greater than 40°C. Preferably one resin has a Tg of greater than 50°C.

Any reference herein to Tg (glass transition temperature) is to the Tg as measured by Differential Scanning Calorimetry (DSC). Differential Scanning Calorimetry (DSC) is a thermal analysis technique that looks at how a material's heat capacity (Cp) varies with temperature. A sample of known mass is heated or cooled in a small pan alongside an identical but empty pan and the changes in its heat capacity are tracked as changes in the heat flow. This allows the detection of transitions such as melts, glass transitions, phase changes, and curing. The biggest advantage of DSC is the ease and speed with which it can be used to see transitions in materials. In the glass transition region, where the material changes from a glassy form to a liquid form, there is an endothermic step-change in the heat flow the midpoint (or onset or inflection point) of which can be used to define the glass transition (Tg). All Tg values mentioned herein are midpoint values, as is standard and a well-known method to those knowledgeable in the art of polymer science.

The thermosetting epoxy functional (meth)acrylate resin may be free or substantially free of hydroxyl functionality.

The thermosetting epoxy functional (meth)acrylate resin may have an epoxy functionality per molecule (f/M) value of less than 14, for example less than 10. The thermosetting epoxy functional (meth)acrylate resin preferably has a f/M value from about 5 to about 13.5, and in yet another embodiment, an f/M value from about 8 to about 10. The f/M value is calculated from Mw/EEW. The Mw may be determined by Gel Permeation Chromatography (GPC). The EEW may be determined by the acetic acid/perchloric acid method (ASTM D 1652-04) using a Metrohm Autotitrator equipped with a 808 Titrando and a 805 Dosimat unit.

In some embodiments the thermosetting epoxy functional (meth)acrylate resin has a weight average molecular weight (M_{w}) ranging from 2,000 to 20,000, preferably 2,000 to 10,000. As used herein, unless otherwise indicated, the term "molecular weight" refers to the weight average molecular weight of a polymer as measured by gel permeation chromatography (GPC) calibrated with polystyrene standards.

The thermosetting epoxy functional (meth)acrylate resin may be formed by conventional polymerization methods in the presence of a thermal or redox initiator. Organic solvent polymerization may be performed. In other cases, aqueous emulsion polymerization may be performed.

The invention is also directed to a powder coating composition comprising the thermosetting epoxy functional (meth)acrylate resin as herein described and a crosslinker capable of crosslinking with the resin.

For the avoidance of doubt, "a crosslinker" means one or more crosslinkers. The crosslinker comprises functional groups that are capable of reacting with the functional groups of the thermosetting epoxy functional (meth)acrylate resin. Preferred crosslinkers are any crosslinkers that react with epoxy groups without causing yellowing in the product coating, e.g. di- or polyacids, anhydrides or dianhydrides.

Preferred crosslinkers include organic dicarboxylic acids and their anhydrides, such as sebacic acid, adipic acid, azelaic acid and dodecanedioic acid, adducts made from esterification of the organic dicarboxylic acids or anhydrides with polyesters or polyols, and polyisocyanates. The crosslinker can help to improve the chip resistance of coatings formed from the powder coating composition. Most preferably, the crosslinker comprises an acid functional crosslinker.

The amount of crosslinker in the powder coating composition may typically range from 5 to 35 wt.%, based on the total weight of the powder coating composition.

The powder coating compositions may further comprise an adjuvant, an adhesion promoter, a light stabilizer, and an ultraviolet (UV) absorber or a combination thereof.

Suitable amounts of adhesion promoter range from about 0.1 wt.% to about 10 wt.%, based on the total weight of the powder coating composition, preferably from 0.2 to 3 wt.%. Amounts of greater than about 3 wt.% can contribute to weatherability problems. Most preferably the amount of adhesion promoter ranges from about 0.1 to about 1 wt.%. The adhesion promoter may comprise one or more epoxy resins, isocyanate compounds or prepolymers having a T_{g} of 40°C or higher, such as, epoxy resins, epoxy-phenolic novolac resins, dimers and trimers of isophorone diisocyanate (IPDI), hexamethylene diisocyanate (HMDI) or toluene diisocyanate, blocked isocyanates, such as caprolactam blocked IPDI, and isocyanate terminated prepolymers of diisocyanates or their dimers or trimers with a polyol or glycol. Preferred adhesion promoters are bisphenol epoxy resins, more preferably bisphenol A or bisphenol F epoxy resins.

The adjuvant(s) may be a hydrophobic submicron particle to aid in filiform corrosion resistance. For example, the powder coating compositions may further comprise from about 0.1 wt% to about 1.5 wt.%, based on the total weight of the powder coating composition of a hydrophobic submicron particle, such as an inorganic oxide, e.g. a metal oxide or silica, and an organosilicon compound, e.g. polydimethyl siloxane (PDMS) treated fume silica.

Optionally, hydrolyzable silanes, e.g. alkoxysilanes, may also be used in the amount of from about 0.01 to about 3 wt.%, in another embodiment preferably, about 0.01 wt% to about 0.3 wt.%, based on the total weight of the powder coating composition to couple fillers and inorganic oxide pigments into the coating matrix. Examples of suitable silanes include glycidyl alkoxy silanes and amino alkoxy silanes, such as glycidyl trimethoxy silane.

The light stabilizers or ultraviolet (UV) absorbers may be used to aid in weatherability. Such a light stabilizer or UV light absorber may be used in amounts of from about 0.1 to about 15 phr, preferably from about 0.1 phr to about 5 phr. Suitable light stabilizers include, for example, hindered amines, such as poly(alkanoyl piperidine alcohols), e.g. oligomers of dimethyl succinate with 4-hydroxy tetramethyl piperidine ethanol, hindered phenols, or combinations thereof; suitable UV light absorbers include, for example, benzotriazoles, oxalic acid diarylamides, and 2-hydroxy benzophenone.

Small amounts, e.g. from about 0.001wt% to about 0.10 wt.%, based on the total weight of the powder coating composition, preferably, from about 0.001 wt.% to about 0.05 wt.%, of organic pigments, such as phthalo-cyanines may be included to control yellowing. The powder coating composition may additionally comprise any of from about 0.001 to about 1.0 wt.%, based on the total weight of the powder coating composition, of optical brighteners and/or leveling agents; from about 0.1 to about 10 phr, based on the total weight of the powder coating composition, of flatting agents, such as alkyl (meth)acrylate copolymers, from about 0.01 phr to about 6 phr of waxes; and from about 0.01 to about 1.0 wt.%, based on the total weight of the powder coating composition, of post blend additives, such as dry flow aids like silica and fume alumina.

The powder coating composition may comprise (at least) two different resins (copolymers) and a crosslinker capable of crosslinking with the resins (copolymers). i.e. The powder coating composition may comprise a thermosetting epoxy functional acrylate resin according to the invention, a different resin, and a crosslinker capable of crosslinking with the resins.

To make a powder coating composition comprising mixtures of resins (copolymers), the resins may be mixed, for example, at any time after polymerization, or one resin may be copolymerized in the presence of an already formed resin.

Suitable resins/copolymers for admixture with the thermosetting epoxy functional (meth)acrylate copolymer may be chosen from a different epoxy functional (meth)acrylate copolymer, an epoxy functional vinyl copolymer, carboxylic acid functional acrylic copolymers, carboxylic acid functional vinyl copolymers, and mixtures and combinations thereof.

Preferably the resin for admixture with the thermosetting epoxy functional (meth)acrylate copolymer is a different (second) epoxy functional (meth)acrylate copolymer. The second epoxy functional (meth)acrylate copolymer may have, for example, a Tg of greater than 50°C, 60°C, 70°C or 80°C. The second epoxy functional (meth)acrylate copolymer may have a weight average molecular weight of greater than 2,000, for example between 2,000 to about 20,000.

For example, the powder coating composition may comprise two different thermosetting epoxy functional (meth)acrylate resins according to the invention and a crosslinker capable of crosslinking with the resins. Preferably both resins have a Tg of greater than 40^{O}C. Preferably one or both resins has/have a Tg of less than 80°C. Most preferably one or both of the resins has/have a Tg of greater than 50 ^{O}C and less than 70°C

Powder coating compositions are produced according to conventional methods. The components may be blended, and then intimately mixed, such as, for example, by melt-compounding so that no significant curing occurs. The molten compound may be extruded, and after extrusion, rapidly cooled, followed by grinding and, as necessary, sorting the particulates according to size. Optionally, in another embodiment, the powder coating compositions may be produced by bonding particles comprising acrylic copolymer with the hydrophobic submicron particle to form agglomerate particles.

The thermosetting epoxy functional (meth)acrylate resins described herein may be used to produce clear or tinted clear powder coatings exhibiting excellent filiform and CASS corrosion resistance on aluminum or forged alloy substrates, such as automotive wheel substrates, using conventional coating application techniques. The powder coating compositions enable improved filiform and CASS corrosion resistance, along with excellent appearance, good color and excellent blocking resistance. The powder coating compositions described herein provide filiform and CASS corrosion resistant coatings used to coat surfaces of iron, steel, magnesium alloy and brass substrates. The powder coating composition can harden to form a clear coating.

Powder coating compositions may be applied to metal substrates, whether pre-treated, pre-coated, or bare. Suitable substrates may include, for example aluminum, forged alloys, iron, steel, magnesium alloy, such as electronic goods and brass, such as lock and door hardware. Aluminum substrates may include, for example, aluminum silicon alloys, aluminum lithium alloys, aluminum magnesium, aluminum zinc, aluminum manganese, aluminum copper base alloys such as aluminum bronze, and the like. The alloys may be single, binary, or have more than two metals. The substrates are preferably pretreated. Aluminum and forged alloy substrates may be pretreated with, for example, a self-assembled monolayer of phosphorus organic material; zirconium titanates or acrylic modified zirconium titanate. Steel and iron substrates may be pretreated with passivating agents, such as zinc phosphate or iron phosphate. Particularly suitable substrates include aluminum wheels and automotive trim. Preferably the substrate is aluminum or a forged alloy.

The invention also relates to a coated substrate coated with a powder coating composition, said powder coating composition comprising the thermosetting epoxy functional (meth)acrylate resin as claimed and a crosslinker for the resin.

The powder coating composition can harden to form a clear coating. A clear coating means that the coating has a Haze Value of 70% or lower when measured using a Rhopoint IQ (Goniophotometer) according to ASTM D523 at a dry film thicknesses of 3 mils.

The powder coating compositions may be applied via conventional means. For electrostatic coating, the average size of the particles may range from about 5 to about 200 µm, in another embodiment from about 25 µm or more to about 75 µm or less.

Once applied the coatings are cured thermally, for example, at temperatures of from about 90 to about 250°C for a period of from about 30 seconds to about 90 minutes. Heat for thermal cure may come from a convection, infrared (IR) or near IR source.

The examples set forth below are provided to illustrate embodiments of the thermosetting epoxy functional (meth)acrylate resins and powder coating compositions described herein and are not intended to limit the scope of the claimed invention.

### EXAMPLES

### Test Methodologies

Dry film thickness was measured using a POSITECTOR^{™} Model 6000-FN1 Coating Thickness Gauge from DeFelsko Corporation, Ogdensburg, NY, the film thickness was measured according ASTM D 1400-00 "Standard Test Method for Nondestructive Measurement of Dry Film Thickness of Nonconductive Coatings Applied to a Nonferrous Metal Base", 2000. Film thickness is reported as the range (low to high) of three readings measured in the center portion of the panel.

Filiform Resistance testing of powder coatings applied to machined aluminum plaques (acquired by Enkei Corporation, Act Tower 26FL 111-2, Itayamachi, Naka-ku, Hamamatsu-city, Shizuoka-prep, 430-7726, Japan) (cast aluminum alloy A356 ), was conducted by cutting a scribe through the coating down to the substrate (approximately 100 mm scribe length) perpendicular to machining lines with a hemispherical ruby tip scribing tool/fixture per SAE J2634 (Manufactured by Sheen Instruments) but modified as follows: A continuity check was conducted down the full length of the scribe to ensure exposure down to the base metal. A test panel holder with a filiform test panel moves with a constant speed of 3-4 cm/s beneath the point of the ruby tip (Ø=1 mm), which is horizontally placed compared to the test panel. The load placed on the ruby tip has been tested and is fixed at a weight of 6600g.

The scribed plaques were placed in a CASS chamber per ASTM B 368-97 (2003) such that the plaque and scribe were at an angle of approximately 45 degrees to the horizontal on a non-metallic rack. The plaques were exposed to 6 hours in the CASS cabinet as described in ASTM B 368-97 (2003). After CASS, a 3 second vertical, 90 degree oscillating-turn rinse of constant flow DI water was conducted on every plaque. The plaques were placed into a humidity cabinet within 15 minutes after rinsing. All plaques in the humidity chamber were positioned so that droplets of moisture run off the part at approximately 45 degrees. The plaques were exposed inside the humidity chamber for 672 hours. Maximum filiform growth for each plaque was assessed every 168 hours. The lengths of all the filaments on each specimen are measured with a metric ruler and average creepage (length of the filaments) and the maximum creepage (longest filament length) are reported.

Wet adhesion was measured in accordance with the ISO 4624Standard however modified as follows: Approximately 1.3g of powder was sprayed onto a fully pre-treated test panel (6 x 4" and 6mm thick), then placed flat in the oven at 350F for 3 minutes until the coating went clear. The test panel was removed from the oven and the flat surfaces of 6 pre-treated aluminium dollies each having a circular cross-section and a diameter of 20mm were placed onto the panel and returned to the oven for the remainder of the powders cure schedule. The cured test panel was removed from the oven and allowed to cool before attaching the tensile tester, a Positest ATM20 from Defelsko. The tensile stress was uniformly increased at a rate not greater than 1 MPa/s. The tensile stress to failure for each of the six dollies was recorded in MPa.

The same procedure was followed for the wet adhesion up to the point of the fully cured test panel, which was then placed into a humidity cabinet (60°C, 85%RH) for 28 days, after which it was removed and allowed to cool before attaching the tensile tester, a Positest ATM20 from Defelsko. The tensile stress was uniformly increased at a rate not greater than 1 MPa/s. The tensile stress to failure for each of the six dollies was recorded in MPa.

Distinctness of Image (DOI) and Haze are two parameters' that can be used to qualify the clarity of a clear coating. A Rhopoint IQ (Goniophotometer), a handheld instrument capable of simultaneously measuring these two parameters by placing it directly on top of the cured clear coating was used and measurements were recorded in triplicate. When measuring the DOI; a surface that exhibits a perfect undistorted image returns a value of 100, as the value decreases the image becomes less discernible. This is opposite when examining Haze values as the higher numbers indicate a lower quality surface. 70% is deemed an acceptable level when analyzing dry film thicknesses in the region of 3 mils. Measurements are recorded in accordance to ASTM D523.

Gloss. A clear coating can also be defined by measurements of gloss. Gloss was measured using BYK micro-TRI-gloss meter with calibration tile tray Cat#4522/4527 or equivalents. The gloss of the cured film on Al panel (AL-Q) was measured per ASTM D-523. Parameters for gloss at 20° and 60° are required to be 100+ and 110+ respectively.

Tg was measured by Differential Scanning Calorimetry (DSC). DSC machine and run details: Perkin Elmer Jade DSC with intercooler and nitrogen supply. Run sequence; Cool to -50 °C at 50 °C /minute; hold for 5 minutes at -50 °C; Heat from -50 °C to 250 °C at 20 °C / minute; Cool from 250 °C to -50 °C at 50 °C /minute; Hold for 5 minutes at -50 °C; Heat from -50 °C to 150 °C at 20 °C /minute; Cool from 150 °C to 20 °C at 20 °C /minute. The Tg data are collected from the second heating run and quoted as the mid-point of the glass transition.

### Resin Example 1- Epoxy functional (meth)acrylate resin (Comparative Example)

500.1 grams of n-butyl acetate was charged to a 4-necked 5-liter round bottom glass reactor equipped with a mechanical stirrer, a condenser, a nitrogen inlet and bubbler, a temperature measuring probe and a monomer/initiator feed tube. The flask was heated under reflux (at approximately 125°C) with a nitrogen atmosphere. A mixture of monomers and initiator was prepared by combining 280 grams (23.67 mol%) of glycidyl methacrylate, 150 grams of Isobornyl methacrylate (8.11 mol%), 530 grams of methyl methacrylate (63.61 mol%), 40 grams of styrene (4.61 mol%), 179.1g grams of n-butyl acetate and 67 grams of TRIGONOX^{®} 21S (tert-butyl peroxy-2-ethylhexanoate) initiator in a 5-liter container. The nitrogen flow was turned off to the reactor. The monomer and initiator mixture were fed into the reactor over 3 hours maintaining an internal temperature of 122-129 °C. After addition of the monomer and initiator mixture, a second mixture of 5.2 grams of TRIGONOX^{®} 21S in 57.1 grams of butyl acetate was added to the flask, again maintaining the internal temperature of 122-129°C. The reaction was maintained at approximately 125°C for an additional 45 minutes. The reactor set-up was then changed from a reflux condenser to a distillation set-up. The temperature was increased to 145°C - 150°C in order to evaporate the solvent which is then removed from the reactor mixture by distillation. Once the distillation was complete the molten polymer was discharged into trays and the residual solvent was removed in a vacuum oven at 150°C. The trays were then removed from the oven, the resin was allowed to cool to room temperature and then crushed into solid particles. Resultant powder of Example 1 had a Tg of 62.6⁰C (measured), Mw of 5546 and Mn of 2572.

### Resin Examples 2 and 3 - Epoxy functional (meth)acrylate resin (according to the invention)

Examples 2 and 3 were prepared in exactly the same way as Control Example 1, except 5mol% or 10mol% of MMA in the Control Example 1 was substituted with the same mole% of VPADME (dimethyl vinylphosphonate) monomer in Example 2 and Example 3 respectfully. The monomers and initiator amounts are shown in Table 1.

**Table 1**

| | **Example 2** | **Example 3** |
|---|---|---|
| | 5mol% VPADME | 10mol% VPADME |
| glycidyl methacrylate | 275.87g (23.67 mol%) | 271.86g (23.67 mol%) |
| Isobornyl methacrylate | 147.79g (8.11 mol%) | 145.64g (8.11 mol%) |
| methyl methacrylate | 481.14g (58.61mol%) | 433.70g (53.61mol%) |
| Styrene | 39.41g (4.61 mol%) | 38.84g (4.61 mol%) |
| Dimethyl vinylphosphonate | 55.79g (5mol%) | 109.96g (10mol%) |
| TRIGONOX^{®} 21S - main charge | 67.9g (3.83 mol%) | 66.9g (3.83 mol%) |
| TRIGONOX^{®} 21S - boost | 5.3 g (0.3 mol%) | 5.2 g (0.3 mol%) |

The powder of Example 2 had a Tg (measured) of 56.9°C, Mw of 5931, Mn of 2851, EEW of 560.2 and f/m of 10.6. The powder of Example 3 had a Tg (measured) of 59.5°C, Mw of 5473, Mn of 2672, EEW of 559.9 and f/m of 9.8.

### Preparation of Coating Formulation Examples 4, 5 and 6

The powder coating Formulation Examples 4, 5 and 6 were formed from the components listed in Table 2 according to a method wherein the raw ingredients were blended in a Prism mixer for 30 seconds @ 2000 RPM, then extruded in a Thermo Prism TSE 24 HC Twin Screw Extruder at 400 rpm, 50-70% torque and 100°C (212°F) barrel temperature setting. The resulting molten extrudate was allowed to fall onto a chill plate and rolled into sheets that were subsequently granulated into chip form. Post blend (dry flow) additives were mixed with the chips by bag-shaking for 0.25-0.5 min. The post blend treated chips were then ground to a fine powder in a ZM lab mill (Retsch, Wuppertal-Haan, Germany) at 20.000 rpm using a 1.0 mm screen size screen. The resulting ground powder was screened through a 74 µm (200 mesh) size sieve for subsequent application to form coatings and was applied to the indicated substrate with a Corona electrostatic spray gun to the indicated thickness and was then cured at the standard cure schedule in an electric heated lab oven.

**Table 2**

| | **4(CONTROL)** | **5** | **6** |
|---|---|---|---|
| Resin Example 1 (Control) | 80.42 | | |
| Resin Example 2 | | 80.42 | |
| Resin Example 3 | | | 80.42 |
| ¹Sebacic Acid | 15.78 | 15.78 | 15.78 |
| ²Benzoin | 0.96 | 0.96 | 0.96 |
| ³ Acrylate copolymer flow modifier | 0.96 | 0.96 | 0.96 |
| ⁴Polyester of dimethyl succinate with 4-hydroxy tetramethyl piperidine ethanol | 0.48 | 0.48 | 0.48 |
| ⁵Triazine | 0.48 | 0.48 | 0.48 |
| ⁶Organophosphite antioxidant | 0.34 | 0.34 | 0.34 |
| ⁷Phenolic antioxidant | 0.34 | 0.34 | 0.34 |
| ⁸Bis Benzoxazoles | 0.002 | 0.002 | 0.002 |
| ⁹Dioxazine violet | 0.004 | 0.004 | 0.004 |
| ¹⁰Glycidyl trimethoxy silane | 0.24 | 0.24 | 0.24 |
| ¹¹Fumed aluminum oxide - Dry flow | 0.2 | 0.2 | 0.2 |

| | | | |
|---|---|---|---|
| 1. Sebacic Acid, ICC Chemical Corp., Warrenville, IL. 2. Mi Won benzoin, GCA Chemical Corp., Bradenton, FL. 3. Resiflow^{™} PL 200, Estron Chemical, Calvert City, KY. 4. UVAsorb^{™} HA22, 3V Inc, Charlotte, NC 5. Tinuvin^{™} 405, BASF Pigments and Resins, Ludwigshafen, Germany. 6. Ultranox^{™} 626, Addivant, Inc, Middlebury, CT. 7. Irganox^{™} 1076, BASF Plastic Additives, Basel, Switzerland. 8. Optiblanc^{™} PL, 3V Inc, Weehawken, NJ. 9. Hostaperm^{™} 14-4006 Violet PL SP, Clariant, Charlotte, NC. 10. Xiameter^{™} OFS-6040 Silane, Dow Corning Corp., Midland, MI. 11. Aeroxide^{™} C, Evonik Corp., Parsippany, NJ | | | |

### Preparation of coated aluminum substrates and testing

Coated aluminum substrates were prepared in the following manner. Raw aluminum ingot of alloy A356 (acquired from Enkei Corporation, Act Tower 26FL 111-2, Itayamachi, Naka-ku, Hamamatsu-city, Shizuoka-prep, 430-7726, Japan was cut into dimensions of 6 x 4" and 6mm thick plaques then machined on one side with a diamond tipped lathe having an approximate width of 350 microns for each machining line. Surface treatment of the aluminum plaques was conducted using a commercially available pretreatment with the following four stages in chronological order with DI water rinses in-between steps. Stages: Mild alkaline cleaner, acid deoxidizer solution, non-chrome conversion of zirconium titanate and self-assembled monolayer of phosphorous organic material. A final dry off of 100°C for 15 minutes in an electric oven was conducted to ensure the substrate was fully dry prior to packaging. The pretreated aluminum plaques were then powder coated on the same day and cured for 25 minutes to achieve a substrate surface temperature of 176.6°C (350°F) to give films having thicknesses of 60-80 µm (approximately 2.0-3.0 mils).

For each coating, the mean filiform length, wet adhesion, 20° Gloss, 60° Gloss, DOI and haze were measured. The results are shown in Table 3.

**Table 3**

| **Formulation Example** | **4 (control)** | **5** | **6** |
|---|---|---|---|
| | No VPADME | 5mol% VPADME | 10 mol% VPADME |
| Mean Filiform Length, mm (over 6 replicates) | 1.1 | 0.8 | 0.7 |
| (machined Al. plaque) | | | |
| Wet Adhesion (MPa) | 19 | 30 | 37 |
| 20° Gloss | 93 | 106 | 100 |
| 60° Gloss | 111 | 118 | 118 |
| DOI | 55 | 78 | 84 |
| Haze (%) | 52 | 64 | 58 |

Examples 5 and 6 show that a polymer prepared using VPADME monomer provides a significant improvement in filiform corrosion resistance and wet adhesion with no loss in Clarity in comparison to the control epoxy functional (meth)acrylate copolymer of Example 1. The greater the amount of VPADME, the greater the improvement in filiform corrosion resistance. The control formulation is similar to powder formulation 3 in US 9,834,634 which also comprises a resin made up from glycidyl methacrylate, Isobornyl methacrylate, methyl methacrylate and styrene monomers and no dimethyl vinylphosphonate. The mean filiform length of example 3 in US 9,834,634 was reported to be 1.56 (also worse performance compared to examples 5 and 6 of the current invention).

### Other

While particular embodiments of the present invention have been illustrated and described herein, the invention is not intended to be limited to the details shown. Rather, various modifications may be made in the details within the range and scope of equivalents of the claims and without departing from the spirit and scope of the invention.

All phrases comprising parenthesis denote either or both of the included parenthetical matter and its absence. For example, the phrase "(co)polymer" includes, in the alternative, polymer, copolymer and mixtures thereof.

Unless otherwise noted, all processes refer to and all examples were performed under conditions of standard temperature and pressure (STP). Unless otherwise noted, all percentages are by weight.

All ranges cited herein are inclusive and combinable. For example, if an ingredient may be present in amounts of 0.05 wt.% or more to 1.0 wt.%, and in amounts up to 0.5 wt.%, then that ingredient may be present in amounts of from 0.05 to 1.0 wt.%, from 0.5 to 1.0 wt.% or from 0.05 to 0.5 wt.%.

As used herein, the phrase "powder coating" refers to a coating formed from a powder coating composition.

As used herein, the term "phr" means the amount, by weight, of an ingredient per hundred parts, by weight, of the resin system. "Resin system" refers to the total of epoxy resin, toughening resin and any crosslinker, curing agent or hardener (but not catalyst) which becomes an integral part of the cross-linked structure.

As used herein, the term "polymer" includes random, block, segmented and graft copolymers, and any mixture or combination thereof. The term "copolymer" shall mean any polymer made from two or more different monomers. The term "copolymerization" shall mean the polymerization process for making a copolymer. As used herein, the terms "resin" and "polymer" are interchangeable.

As used herein, the term "substantially free from (a specified) copolymerized monomer" means that a copolymer comprises 2 wt.% or less of the copolymerized monomer specified, based on the total weight of copolymerized monomers.

## Claims

1. A thermosetting epoxy functional (meth)acrylate resin comprising, as copolymerized monomers:
i) from about 10 wt.% to about 40 wt.% of an epoxy functional unsaturated monomer;
ii) from about 10 wt.% to about 20 wt.% of an alkyl (meth)acrylate monomer, wherein the alkyl comprises a minimum of 6 carbon atoms,
iii) from about 30 wt.% to about 70 wt.% of an alkyl (meth)acrylate monomer wherein the alkyl comprises 1 to 5 carbon atoms,
iv) from about 0,5wt% to 40wt% of a dialkyl vinylphosphonate monomer,
v) from about 1 wt.% to about 50 wt.% of a vinyl aromatic monomer, and
vi) from about 0 wt% to 0.4wt% of a phosphonic acid monomer, wherein each monomer wt.% based on the total weight of copolymerized monomers in the resin.

2. The thermosetting epoxy functional (meth)acrylate resin of claim 1 wherein the dialkyl vinylphosphonate monomer iv) comprises a di- C₁ to C₄ alkylphosphonate monomer.

3. The thermosetting epoxy functional (meth)acrylate resin of any preceding claim wherein the dialkyl vinylphosphonate monomer iv) comprises a dimethylphosphonate monomer.

4. The thermosetting epoxy functional (meth)acrylate resin of any preceding claim, wherein the alkyl(meth)acrylate monomer ii) comprises a bicycloalkyl (meth)acrylate and/or a branched alkyl (meth)acrylate.

5. The thermosetting epoxy functional (meth)acrylate resin of claim 4, wherein the bicycloalkyl (meth) acrylate comprises isobornyl (meth)acrylate.

6. The thermosetting epoxy functional (meth)acrylate resin of any preceding claim, wherein the alkyl (meth)acrylate monomer iii) comprises a C₁ to C₅ alkyl ester of (meth)acrylic acid.

7. The thermosetting epoxy functional (meth)acrylate resin of claim 6, wherein the C₁ to C₅ alkyl ester of (meth)acrylic acid is selected from butyl (meth)acrylate and/or methyl methacrylate.

8. The thermosetting epoxy functional (meth)acrylate resin of any preceding claim wherein the vinyl aromatic monomer v) comprises styrene.

9. The thermosetting epoxy functional (meth)acrylate resin of any preceding claim wherein the epoxy functional unsaturated monomer i) comprises a glycidyl ester of an α-ß ethylenically unsaturated carboxylic acid.

10. A powder coating composition comprising the thermosetting epoxy functional (meth)acrylate resin of any of claims 1 to 9, and a crosslinker capable of crosslinking with the resin.

11. The powder coating composition of claim 10 comprising two different thermosetting epoxy functional (meth)acrylate resins of any of claims 1 to 9, and a crosslinker capable of crosslinking with the resins.

12. The powder coating composition of claim 10 or claim 11, wherein the crosslinker is an organic dicarboxylic acid, an anhydride, or an adduct thereof with a polyester or a polyisocyanate.

13. The powder coating composition of claim 10, 11 or 12, further comprising one or more adjuvants selected from the group consisting of a hydrophobic submicron particle, an adhesion promoter, a light stabilizer, an ultraviolet (UV) absorber and a combination thereof.

14. A coated substrate coated with a powder coating composition, said powder coating composition comprising the thermosetting epoxy functional (meth)acrylate resin of any of claims 1 to 9 and a crosslinker for the resin.

15. The coated substrate of claim 14, wherein the substrate is aluminum or a forged alloy.

## Patentansprüche

1. Hitzehärtbares epoxidfunktionelles (Meth)acrylatharz, umfassend als copolymerisierte Monomere:
i) etwa 10 Gew.-% bis etwa 40 Gew.-% eines epoxidfunktionellen ungesättigten Monomers;
ii) etwa 10 Gew.-% bis etwa 20 Gew.-% eines Alkyl(meth)acrylat-Monomers, wobei das Alkyl mindestens 6 Kohlenstoffatome umfasst,
iii) etwa 30 Gew.-% bis etwa 70 Gew.-% eines Alkyl(meth)acrylat-Monomers, wobei das Alkyl 1 bis 5 Kohlenstoffatome umfasst,
iv) etwa 0,5 Gew.-% bis 40 Gew.-% eines Dialkylvinylphosphonat-Monomers,
v) etwa 1 Gew.-% bis etwa 50 Gew.-% eines vinylaromatischen Monomers und
vi) etwa 0 Gew.-% bis 0,4 Gew.-% eines Phosphonsäure-Monomers, wobei die Gew.-% jedes Monomers auf das Gesamtgewicht an copolymerisierten Monomeren in dem Harz bezogen sind.

2. Hitzehärtbares epoxidfunktionelles (Meth)acrylatharz nach Anspruch 1, wobei das Dialkylvinylphosphonat-Monomer iv) ein Di-C₁- bis -C₄-alkylphosphonat-Monomer umfasst.

3. Hitzehärtbares epoxidfunktionelles (Meth)acrylatharz nach einem der vorhergehenden Ansprüche, wobei das Dialkylvinylphosphonat-Monomer iv) ein Dimethylphosphonat-Monomer umfasst.

4. Hitzehärtbares epoxidfunktionelles (Meth)acrylatharz nach einem der vorhergehenden Ansprüche, wobei das Alkyl(meth)acrylat-Monomer ii) ein Bicycloalkyl(meth)acrylat und/oder ein verzweigtes Alkyl(meth)acrylat umfasst.

5. Hitzehärtbares epoxidfunktionelles (Meth)acrylatharz nach Anspruch 4, wobei das Bicycloalkyl(meth)acrylat Isobornyl(meth)acrylat umfasst.

6. Hitzehärtbares epoxidfunktionelles (Meth)acrylatharz nach einem der vorhergehenden Ansprüche, wobei das Alkyl(meth)acrylat-Monomer iii) einen C₁- bis Cs-Alkylester von (Meth)acrylsäure umfasst.

7. Hitzehärtbares epoxidfunktionelles (Meth)acrylatharz nach Anspruch 6, wobei der C₁- bis Cs-Alkylester von (Meth)acrylsäure aus Butyl(meth)acrylat und/oder Methylmethacrylat ausgewählt ist.

8. Hitzehärtbares epoxidfunktionelles (Meth)acrylatharz nach einem der vorhergehenden Ansprüche, wobei das vinylaromatische Monomer v) Styrol umfasst.

9. Hitzehärtbares epoxidfunktionelles (Meth)acrylatharz nach einem der vorhergehenden Ansprüche, wobei das epoxidfunktionelle ungesättigte Monomer i) einen Glycidylester einer α-β-ethylenisch ungesättigten Carbonsäure umfasst.

10. Pulverbeschichtungszusammensetzung, umfassend das hitzehärtbare epoxidfunktionelle (Meth)acrylatharz nach einem der Ansprüche 1 bis 9 und einen Vernetzer, der zum Vernetzen mit dem Harz befähigt ist.

11. Pulverbeschichtungszusammensetzung nach Anspruch 10, umfassend zwei verschiedene hitzehärtbare epoxidfunktionelle (Meth)acrylatharze nach einem der Ansprüche 1 bis 9 und einen Vernetzer, der zum Vernetzen mit den Harzen befähigt ist.

12. Pulverbeschichtungszusammensetzung nach Anspruch 10 oder 11, wobei es sich bei dem Vernetzer um eine organische Dicarbonsäure, ein Anhydrid oder ein Addukt davon mit einem Polyester oder einem Polyisocyanat handelt.

13. Pulverbeschichtungszusammensetzung nach Anspruch 10, 11 oder 12, ferner umfassend einen oder mehrere aus der Gruppe bestehend aus einem hydrophoben Submikronteilchen, einem Haftvermittler, einem Lichtschutzmittel, einem Ultraviolett(UV)-Absorber und einer Kombination davon ausgewählte Hilfsstoffe.

14. Beschichtetes Substrat, das mit einer Pulverbeschichtungszusammensetzung beschichtet ist, wobei die Pulverbeschichtungszusammensetzung das hitzehärtbare epoxidfunktionelle (Meth)acrylatharz nach einem der Ansprüche 1 bis 9 und einen Vernetzer für das Harz umfasst.

15. Beschichtetes Substrat nach Anspruch 14, wobei es sich bei dem Substrat um Aluminium oder eine Schmiedelegierung handelt.

## Revendications

1. Résine de (méth)acrylate fonctionnalisé par époxy thermodurcissable comprenant, en tant que monomères copolymérisés :
i) d'environ 10 % en poids à environ 40 % en poids d'un monomère insaturé fonctionnalisé par époxy ;
ii) d'environ 10 % en poids à environ 20 % en poids d'un monomère de (méth)acrylate d'alkyle, l'alkyle comprenant un minimum de 6 atomes de carbone,
iii) d'environ 30 % en poids à environ 70 % en poids d'un monomère de (méth)acrylate d'alkyle, l'alkyle comprenant 1 à 5 atomes de carbone,
iv) d'environ 0,5 % en poids à 40 % en poids d'un monomère de vinylphosphonate de dialkyle,
v) d'environ 1 % en poids à environ 50 % en poids d'un monomère aromatique vinylique, et
vi) d'environ 0 % en poids à 0,4 % en poids d'un monomère d'acide phosphonique,
chaque % en poids de monomère étant basé sur le poids total de monomères copolymérisés dans la résine.

2. Résine de (méth)acrylate fonctionnalisé par époxy thermodurcissable selon la revendication 1, le monomère de vinylphosphonate de dialkyle iv) comprenant un monomère de phosphonate de di- C₁ à C₄ alkyle.

3. Résine de (méth)acrylate fonctionnalisé par époxy thermodurcissable selon une quelconque revendication précédente, le monomère de vinylphosphonate de dialkyle iv) comprenant un monomère de phosphonate de diméthyle.

4. Résine de (méth)acrylate fonctionnalisé par époxy thermodurcissable selon une quelconque revendication précédente, le monomère de (méth)acrylate d'alkyle ii) comprenant un (méth)acrylate de bicycloalkyle et/ou un (méth)acrylate d'alkyle ramifié.

5. Résine de (méth)acrylate fonctionnalisé par époxy thermodurcissable selon la revendication 4, le (méth)acrylate de bicycloalkyle comprenant un (méth)acrylate d'isobornyle.

6. Résine de (méth)acrylate fonctionnalisé par époxy thermodurcissable selon une quelconque revendication précédente, le monomère de (méth)acrylate d'alkyle iii) comprenant un ester d'alkyle en C₁ à C₅ d'acide (méth)acrylique.

7. Résine de (méth)acrylate fonctionnalisé par époxy thermodurcissable selon la revendication 6, l'ester d'alkyle en C₁ à C₅ d'acide (méth)acrylique étant choisi parmi un (méth)acrylate de butyle et le méthacrylate de méthyle.

8. Résine de (méth)acrylate fonctionnalisé par époxy thermodurcissable selon une quelconque revendication précédente, le monomère aromatique vinylique v) comprenant le styrène.

9. Résine de (méth)acrylate fonctionnalisé par époxy thermodurcissable selon une quelconque revendication précédente, le monomère insaturé fonctionnalisé par époxy i) comprenant un ester de glycidyle d'un acide carboxylique éthyléniquement α-β-insaturé.

10. Composition de revêtement en poudre comprenant la résine de (méth)acrylate fonctionnalisé par époxy thermodurcissable selon l'une quelconque des revendications 1 à 9, et un agent de réticulation capable d'une réticulation avec la résine.

11. Composition de revêtement en poudre selon la revendication 10 comprenant deux résines de (méth)acrylate fonctionnalisé par époxy thermodurcissables différentes selon l'une quelconque des revendications 1 à 9, et un agent de réticulation capable d'une réticulation avec les résines.

12. Composition de revêtement en poudre selon la revendication 10 ou la revendication 11, l'agent de réticulation étant un acide dicarboxylique organique, un anhydride, ou un adduit correspondant avec un polyester ou un polyisocyanate.

13. Composition de revêtement en poudre selon la revendication 10, 11 ou 12, comprenant en outre un ou plusieurs adjuvants choisis dans le groupe constitué par une particule submicronique hydrophobe, un promoteur d'adhérence, un photostabilisant, un absorbeur d'ultraviolet (UV) et une combinaison correspondante.

14. Substrat revêtu revêtu par une composition de revêtement en poudre, ladite composition de revêtement en poudre comprenant la résine de (méth)acrylate fonctionnalisé par époxy thermodurcissable selon l'une quelconque des revendications 1 à 9 et un agent de réticulation pour la résine.

15. Substrat revêtu selon la revendication 14, le substrat étant de l'aluminium ou un alliage forgé.
